# EUROPEAN PATENT APPLICATION

(11) **EP 0 845 744 A1**
(43) Date of publication of application: **03.06.1998**
(21) Application number: 96308640.0
(22) Date of filing: 29.11.1996
(51) Int. Cl.: G06F 15/00, G06F 17/60

(54) **Generating consultation data**

(71) Applicant: BRITISH TELECOMMUNICATIONS public limited company, London EC1A 7AJ (GB)
(72) Inventor: Good, Nicholas, Ipswich IP5 7RE (GB); Hutchins, Alison, Ipswich IP5 7RE (GB); Newbold, Richard E., Ipswich IP5 7RE (GB); Puri, Navneet K., Altrincham, Cheshire WA15 8JH (GB); Warne, Diane L., Ipswich IP5 7RE (GB)
(74) Representative: Atkinson, Ralph

(57) **Abstract**

Consultation data is generated by selecting pre-stored narratives from a relational database table. A communication channel is established between consultation stations and a processing station via an HTML intranet. Response data is supplied to the processing station and said responses are analysed at said processing station. A first response is analysed to select a narrative and while processing said first response a second response is recursively processed so as to modify the processing of said first response.

## Description

The present invention relates to generating consultation data by selecting pre-stored narratives.

### Introduction

Systems are known in which selections need to be made based on the requirements of individual members of a group and upon requirements which relate to the group as a whole. Situations of this type often arise when expert systems and similar data based technologies are being engineered to provide assistance to human experts and consultants.

Increasingly, the cost of experts and consultants is becoming relatively high therefore when offering systems for tender and when providing advice in anticipation of receiving a contract for the supply of goods etc, a significant overhead must be carried so as to cover the cost of expert reports and situations where the ultimate contract is not actually received. Thus, there is a need for a technical solution to the production of expert data and reports etc, which can be generated without performing mental acts.

Further problems occur when recommendations, selections and advice are required quickly in order to optimise a market position and under such circumstances, conventional manual and mental processes may not be capable of analysing all of the possible variables within a realistic time frame.

Under these conditions, it has been found desirable to provide mechanised and technical solutions so as to take account of many variables, particularly where variables relate to a group such that the amount of data to be considered may be relatively large and the cost of making a wrong or an inaccurate selection may be high.

Many technical solutions have been put forward, such as the use of neural networks, where the level of unreliability effectively removes these solutions from providing a practical realisation. Conventional mathematical and heuristic techniques may also fail given that such techniques would rely upon a sufficiently accurate mathematical model, in situations where modelling relationships of this type may prove extremely difficult and often impossible.

### Summary of the Invention

According to a first aspect of the present invention, there is provided a method of generating consultation data by selecting pre-stored narratives, comprising steps of establishing a communication channel between a consultation station and a processing station; supplying response data to said processing station; and analysing said response data at said processing station, wherein a first response is analysed to select a narrative and while processing said first response, a second response is recursively processed so as to modify the processing of said first response.

Preferably, the narratives are stored against indexes in a relational database table and a final report table may point to said indexes in said narrative table.

In a preferred embodiment, the processing station supplies a pro-forma to a consultation station and said response data is returned to said processing station after entries have been made within said pro-forma.

Preferably, the response data is stored in a response table of a relational database and responses may be stored for individual members of a consultation group.

### Brief Description of the Drawings

Figure 1 shows an environment in which input responses are received at remote locations and are supplied to a central processing establishment, including a response analysis station and a requisition station;
Figure 2 identifies operations of the environment shown in Figure 1, including a step of data collection and a step of data processing;
Figure 3 illustrates operations performed by consultation stations shown in Figure 1 so as to transfer data to the central processing station shown in Figure 1;
Figure 4 shows an example of a form completed at a consultation station, representing information relevant to a whole group;
Figure 5 illustrates a form similar to that shown in Figure 4 relevant to specific members within the group;
Figure 6 details the data reception process identified in Figure 2;
Figure 7 shows a plurality of relational database tables stored at the response analysis station shown in Figure 1, including narratives tables;
Figure 8 shows a narrative table for multi-centred working;
Figure 9 shows a narrative table for home-based working;
Figure 10 shows a narrative for office-based working; and
Figure 11 shows a narrative table relating to migration from one type of working to another;
Figure 12 shows processing operations performed by the response analysis station, including steps for processing responses to update an intermediate report table and a step of processing values in said intermediate report table to write values to a final report table;
Figure 13 details said response processing steps identified in Figure 12 including a recursive analysis step;
Figure 14 details the recursive analysis step shown in Figure 13, including steps for processing input responses;
Figure 15 is an example of data processed by the steps shown in Figure 14;
Figure 16 is a further example of data processed by the steps shown in Figure 14;
Figure 17 details the processing of the intermediate report table shown in Figure 12, including a step of identifying a work style or work styles; and
Figure 18 details said identification step as shown in Figure 17.

### Detailed Description of the Preferred Embodiments

The invention will now be described by way of example only with reference to the previously identified drawings.

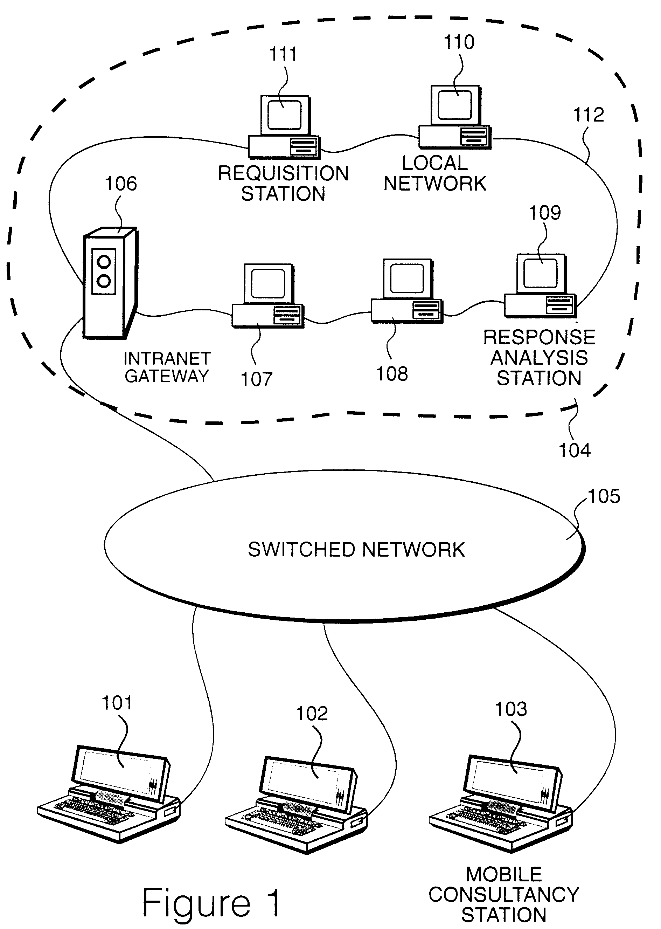

An environment for the generation, transmission, collection and processing of response data in order to produce output selection signals is illustrated in Figure 1. For the purposes of this illustration, it is assumed that a client or a plurality of clients require consultational advice concerning a particular selection to be made This selection may relate to the way in which the client operates. In the particular example, the client requires advice concerning the flexible working of staff and consultants etc. Furthermore, in the preferred embodiment, the selections being made, in the form of the generation of selection signals, are also used to effect other processes, including the requisitioning of materials and the generation of further advice concerning costings and commercial advantages etc. Furthermore, taking this a stage further, the generation of selection signals may also make modifications to a technical environment, such as a switched telecommunications network etc. Thus, in response to recommendations being made, modifications may be made to provide additional bandwidth in particular areas, additional connections and/or additional facilities etc.

In the example shown, clients are visited by consultants and each consultant is provided with a suitable communication device such as a lap top computer. In the example shown in Figure 1, three lap top computers 101, 102, 103 provide independent mobile consultancy stations, which, independently, may be used to collect responses from completely separate and unrelated clients, collect responses from a common client but with reference to different work groups or to collect responses from individual workers within a common workgroup, although a common workgroup is identified with an account manager number, so as to distinguish between the different types of data entry. The system is arranged such that data may be added to database tables as the data volume increases, without specific allocation being made to particular clients or to particular work-group types within said table.

The mobile consultancy stations communicate with a central station, illustrated generally at 104, via a switched network 105. Communication may occur via established protocols, such as the Internet protocol although in the preferred embodiment, a private network is established using these protocols, often referred to as an intranet.

Central station 104 is provided with a UNIX based intranet gateway 106 which in turn communicates with a plurality of workstations 107, 108, 109, 110 and 111 via an Ethernet, ATM or similar network 112. Workstation 109 provides analysis of responses received from mobile consultancy stations in order to generate particular selection signals. These selection signals may be used for purposes such as generating reports and also, where appropriate, said signals may be supplied over the network 112 to a requisition station, established at workstation 111, concerned with the ordering of recommended materials and, where appropriate, the modification of operational machinery, such as communication networks.

In the example, the environment shown in Figure 1 is configured to generate selection signals effectively representing the appropriateness of particular types of flexible working. Recently, it has become realised that traditional working models, which usually involve being based at a particular site for a fixed working day, may not provide the optimum solution to achieve the best results, from an employer's point of view, and/or from an employee's point of view. Many operations conventionally performed within an office environment may equally be performed at home and with increasing use of mobile equipment being made, many of these activities may also be effected at remote locations or at a plurality of specified locations. Consequently, flexible working is usually regarded as being essentially office based, home based or multi-centred based.

Under an office based regime, employees or consultants etc spend some time away from their normal office and are able to perform constructive work away from said office while still spending the majority of their time at their office base. Similarly, with home based working, the employee or contractor's home becomes their main site of activity with relatively small amounts of time being spent at a central office or at another location. With multi-centred working, as the name suggests, a number of centres are used by an employee to perform constructive work with none of the centres being perceived as being of higher importance than any of the others. Thus, selection signals are made which may relate to a preferred type of working, from the three models identified above. These selection signals in turn may be used to select strings or files which are in turn used to construct an eye-readable report. Furthermore, these signals may be used to instigate further processes, used to generate recommendations for particular equipment required for the particular types of working. Furthermore, the selection signals may also be used to effect changes within operating characteristics and operating machinery.

Flexible working is often seen as a mode of working which may or may not be effective and a measure of effectiveness can only be determined after experimentation has taken place. However, experimentation of this type may cause major disruption to normal operation within an office environment and may lead to unnecessary and expensive procurement of equipment etc. Consequently, when major companies are considering the possibility of introducing flexible working, they engage the services of a consultant who, with experience in this field, may be in a position to recommend a type of working to be exercised along with recommendations as to types of equipment required. Under some circumstances, a consultant may conclude that flexible working would not be appropriate for a particular client although it is appreciated that in many of these circumstances it would be highly desirable to provide plausible and logical reasons why.

For a provider of telecommunications infrastructure, a move towards flexible working is desirable, given that it will tend to increase traffic through the network. However, bad advice in this area could have detrimental effects and increasingly competition in network provision will lead to a desirability for being able to produce advice quickly, in addition to accurately.

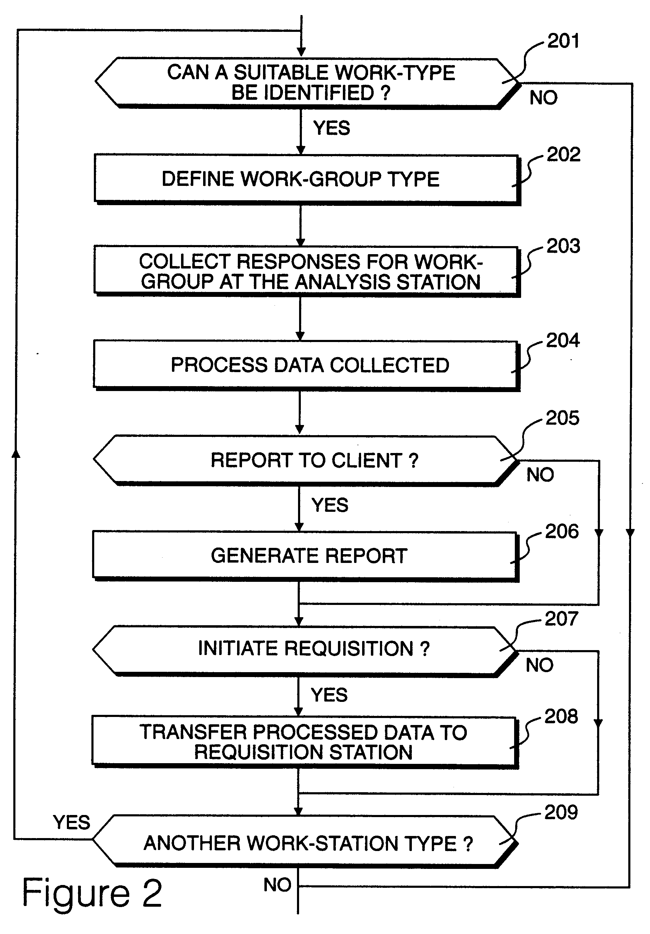

Operation of the system within the environment shown in Figure 1 is illustrated in Figure 2. At step 201 a question is asked as to whether a suitable work type can be identified. The work type usually binds together a group of workers within a client operation who are often providing a similar type of functionality and will therefore be tending to work under similar rules and protocols etc.

After a work type has been identified at step 201 this is defined at step 202 and effectively given a unique identifier which is unique to the system as a whole. Thus, this identifier identifies the particular work group within the particular client and is not reused for any other work group within that particular client or for any work group of any other client. At step 203 responses are collected from individual operators and responses for the work group as a whole are supplied to the analysis station 109.

At step 204 data collected by the analysis station 109 is processed to produce selection data whereafter a request is asked at 205 as to whether a report is to be generated for the client. If answered in the affirmative, the report is generated at step 206 in response to the selected data and thereafter supplied back to the client either in eye readable or machine readable form.

At step 207 a question is asked as to whether requisition is to be initiated and if answered in the affirmative, at step 208 selection data is supplied to the requisition station 111 resulting in equipment specification, advice and, where appropriate actual requisition. At step 209 a question is asked as to whether another work type is to be considered which, if answered in the affirmative, results in the question at step 201 being reconsidered.

Communication between the mobile consultancy stations and the central station 104 is effected in accordance with Hypertext Transport Protocol (HTTP) and consequently results in a page of enquiries being transmitted to mobile consultancy stations, in the form of an HTML page, whereafter responses are added to said page thereby allowing said page to be returned back to the central station 104. In addition to being returned back with responses made, the returned page data, in the form of a Uniform Resource Locator (URL) may also include a request for a subsequent page which, thereafter is subsequently returned back to the requesting mobile consultancy station. Thus, this process is continued with a plurality of pages being transmitted between the stations, each including a plurality of questions therein which in turn results in a response being made by a particular operator.

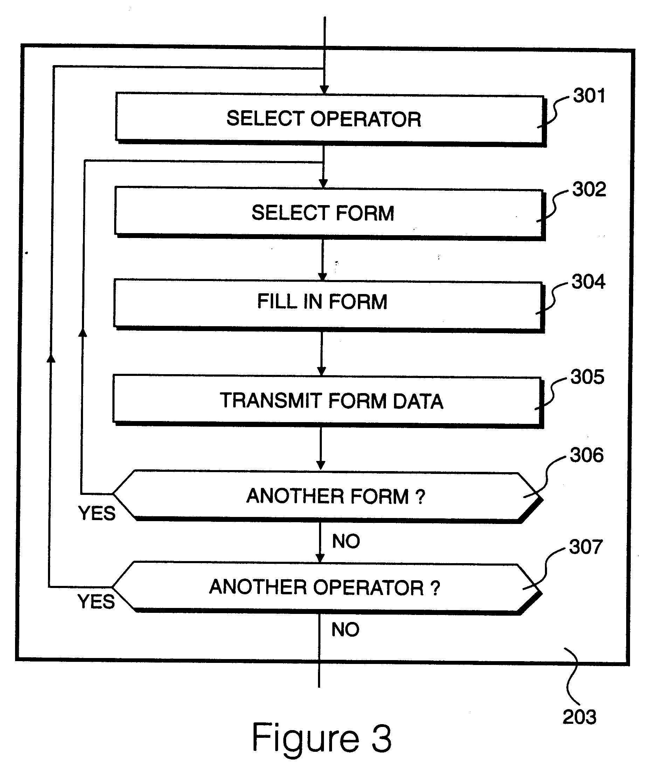

Operations at mobile consultancy stations, such as station 103, are illustrated in Figure 3. At step 301 a selected operator is identified and at step 302 a particular form is selected. This results in a URL being transmitted to the central station 104 which in turn returns a form. The returned form is displayed at the mobile consultancy station, effectively posing questions and data is entered into the form at step 304. The completed form is then returned back to the central station at step 305 to provide response data, and a question is asked at step 306 as to whether another form is to be completed. When answered in the affirmative, form selection is repeated at step 302, the returned form is completed at step 304 and response data is transmitted at step 305.

Eventually, all of the forms will have been completed, producing a full set of responses for a particular operator, resulting in the question asked at step 306 being answered in the negative. At step 307 a question is asked as to whether another operator is to be considered and when answered in the affirmative control is returned to step 301. Thus, multiple forms are completed for multiple operators, whereafter the question asked at 307 is answered in the negative.

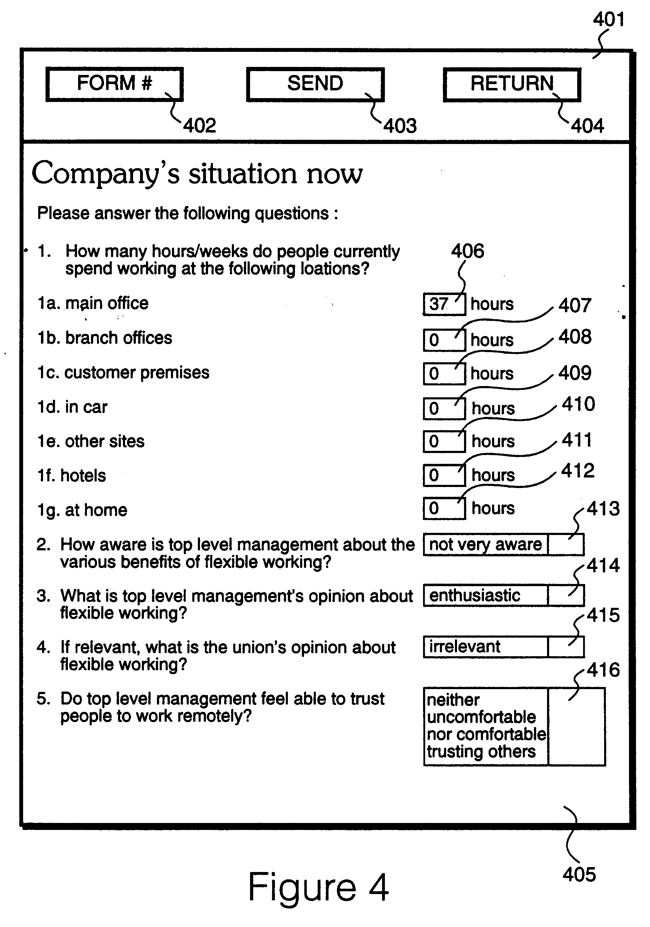

A form is selected at step 302 which results in an HTML page representing a blank form being transmitted from the response analysis station 109 to the requesting mobile consultancy station, such as station 103. A typical form of this type is illustrated in Figure 4, which specifies questions to be responded to by a group manager, these reflecting questions which are applicable to the group as a whole.

The top of the form includes a control panel 401, including a label 402 identifying the form number and a soft button 403, selected by the operator when the operator requires the response data to be returned back to the response analysis station 109. A check box 404 is also included which, when checked, will result in the next form being returned automatically for responses to be completed therefore.

The second part of the form 405 includes fields into which responses are entered. These include a field 406 into which a numerical indication is provided for a manager's estimate of the number of hours currently spent working from the main office. Similarly, at field 407 an indication is provided as to the hours spent at branch offices, at field 408 an indication is provided as to time spent at customer premises, at field 409 an indication is provided as to hours spent in car, at field 410 an indication is provided as to time spent at other sites, at label 411 an indication is provided as to time spent at hotels, and finally, at 412 an indication is provided as to time spent at home.

Below these labels, a list box 413 is provided which, upon selection, provides the plurality of possible answers. Thus, a question is asked as to how aware are top level management about the various benefits of flexible working and in response to this question five possible answers are available, ranging from not very aware, to extremely aware.

A similar list box 414 is provided, requesting a similar response to a question asking for management's opinion about flexible working, with list box 415 requesting a response to a question concerning union's opinion and list box 416 requesting information concerning management's trust with respect to remote working. Thus, this form seeks responses to a total of eleven questions, with the first seven responses representing numerical values and the remaining four responses specifying a particular option from a list of available options.

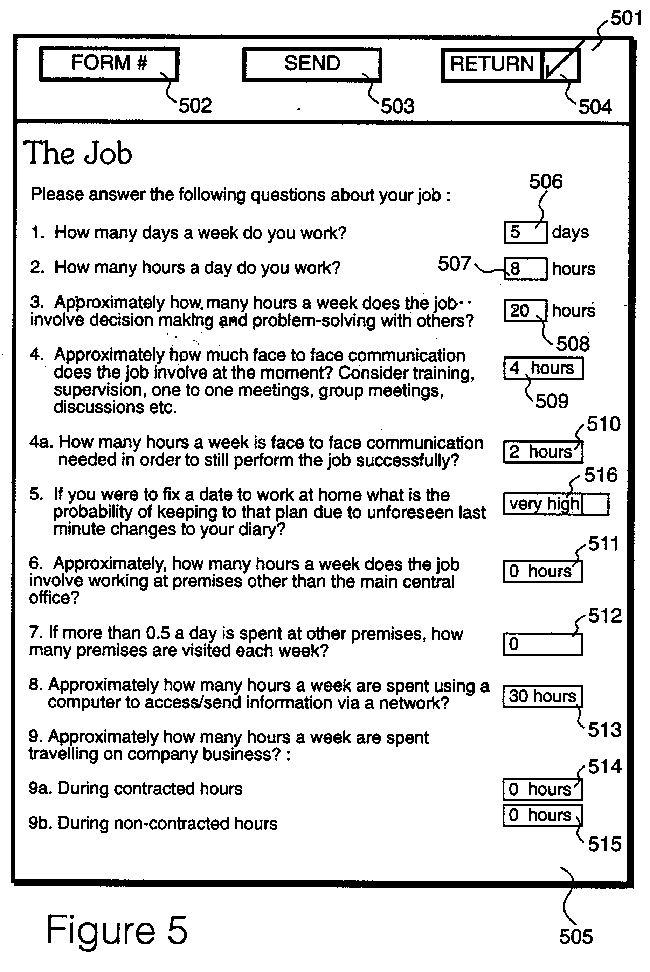

A form similar to that shown in Figure 4 is illustrated in Figure 5. The form shown in Figure 5 represents an example of questions posed at individual workers within the group and therefore forms of this type will be completed by all of said members. The form includes a control section 501, similar to section 401 of the form shown in Figure 4, including a form number indication 502, a soft send button 503 and a check box 504 for the return of the next form.

In the lower portion of the form 505, questions are asked such as how many days a week are worked, to which a numerical response is returned at field 506. Similar fields 507, 508, 509, 510, 511, 512, 513, 514 and 515 are provided, asking further questions such as how many hours a day are worked and approximately how many hours a week does a job involve decision making and problem solving with others etc. A list box 516 is also provided, inviting a response to a question which asks as to the probability of keeping to a plan if a date was actually fixed for working from home.

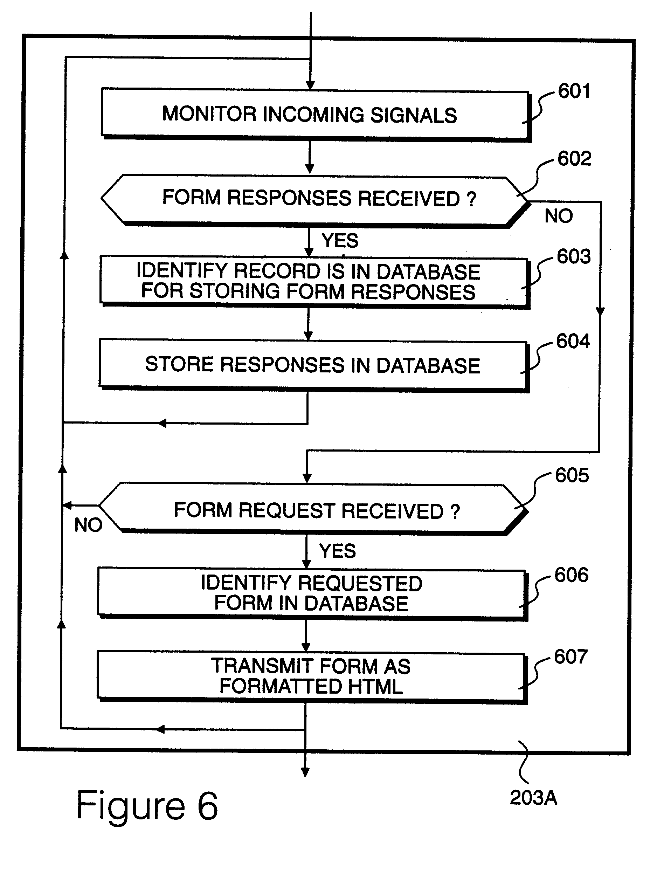

Operations performed by the mobile stations, such as station 103, for the transfer of data interact with similar processes effected by the response analysis station 109, as illustrated in Figure 6.

At step 601 the analysis station 109 monitors incoming signals and, in response to a signal being identified, the question is asked at step 602 as to whether this incoming signal represents received form responses from the mobile consultancy station. If the question asked at step 602 is answered in the negative, control is directed to step 605, where a question is asked as to whether a form request signal has been received. If this question is answered in the negative, control is returned to step 601 and further incoming signal monitoring continues.

If form responses have been received, the question asked at step 602 is answered in the affirmative and at step 603 a database record is identified for storing the form responses received. A record is uniquely identified for each operator and when responses are received from an operator for the first time, the next available record is identified at step 603. Thereafter, subsequent responses for said operator will be written to the same record within the database. Thus, responses are stored in the database at step 604, whereafter control is returned to step 601.

If a request for a further form is received, the question asked at step 602 will be answered in the negative and the question asked at step 605 will be answered in the affirmative. Thereafter, control is directed to step 606, resulting in the requested form being identified from a forms database and subsequently transmitted to the consultancy station at step 607.

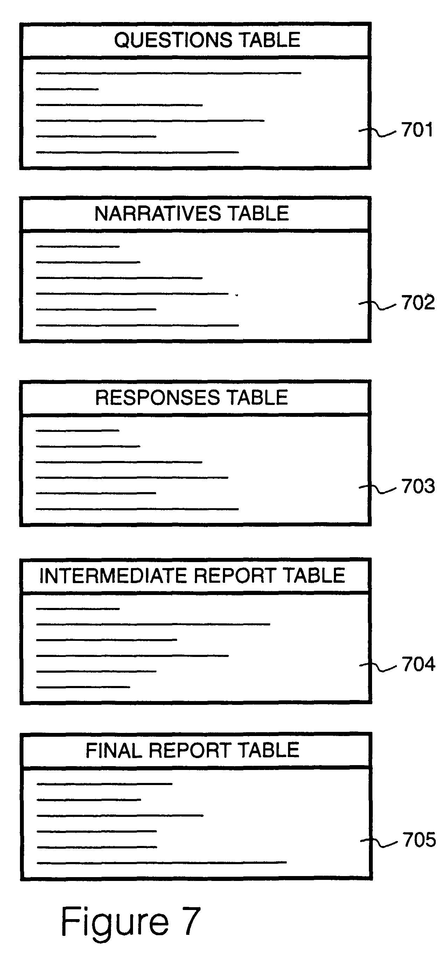

The response analysis station 109 relies greatly upon the use of relational database tables, examples of which are shown in Figure 7. These tables include a questions table 701, a narratives table 702, a responses table at 703, an intermediate report table 704 and a final report table 705. The questions table 701 represents strings of text which will be reproduced in forms so as to define particular questions. The narratives table defines similar strings of output narratives which are selected, in response to selection signals, in order to provide a final output consultation report. Consequently, tables 701 and 702 remain fixed throughout the operation of the system.

Responses table 703 records the responses made by workers and group managers in response to questions derived from the questions table 701. Thus, the particular responses entered within table 703 will depend upon particular consultation characteristics and will vary from session to session. In order to facilitate processing of responses recorded in the responses table 703, an intermediate report table 704 is provided which again will contain values which will be dependent upon a particular session and the responses made within said session. The processing of values held within the intermediate report table 704 will result in input values being written to a final report table 705. This final report table 705 will include tags and pointers to particular narratives stored within the narratives table 702. Thus, the processing of responses from response table 703, in response to questions derived from the questions table 701, will result in values being written to the intermediate report table 704, with subsequent values being written to the final report table 705 which will in turn select string narratives, to make up the final output report, from the narratives table 702.

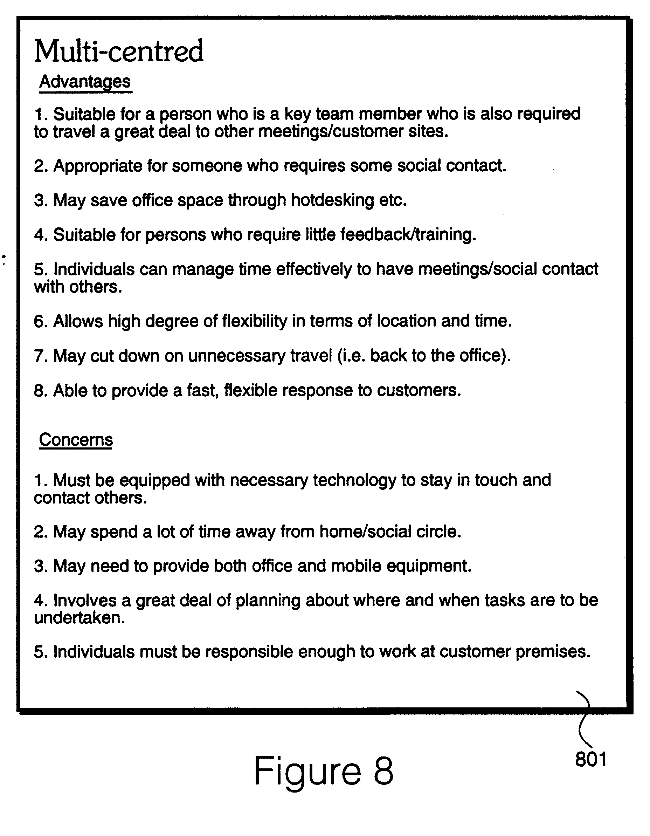

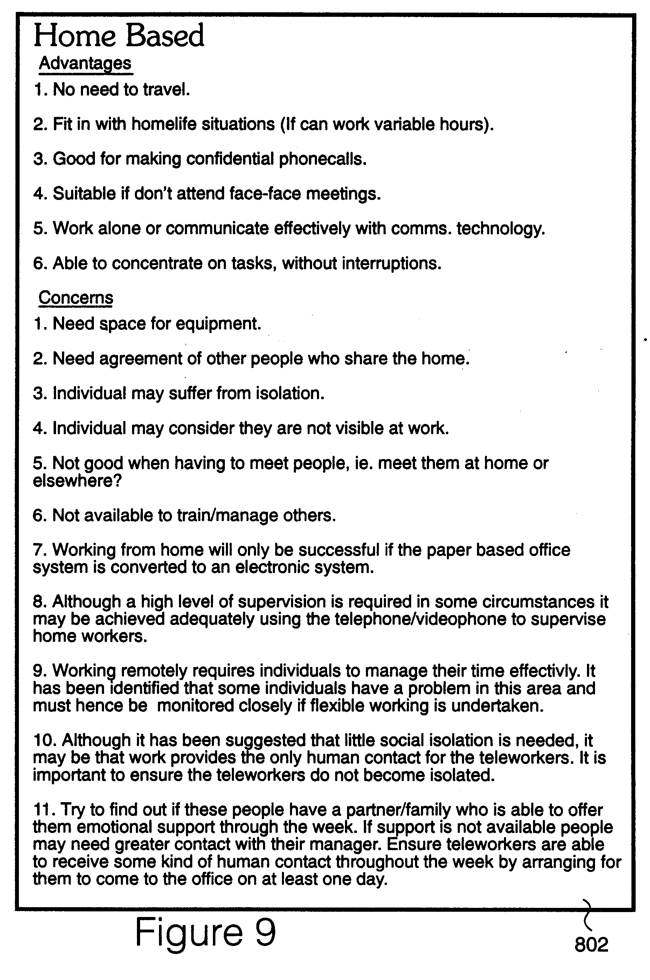

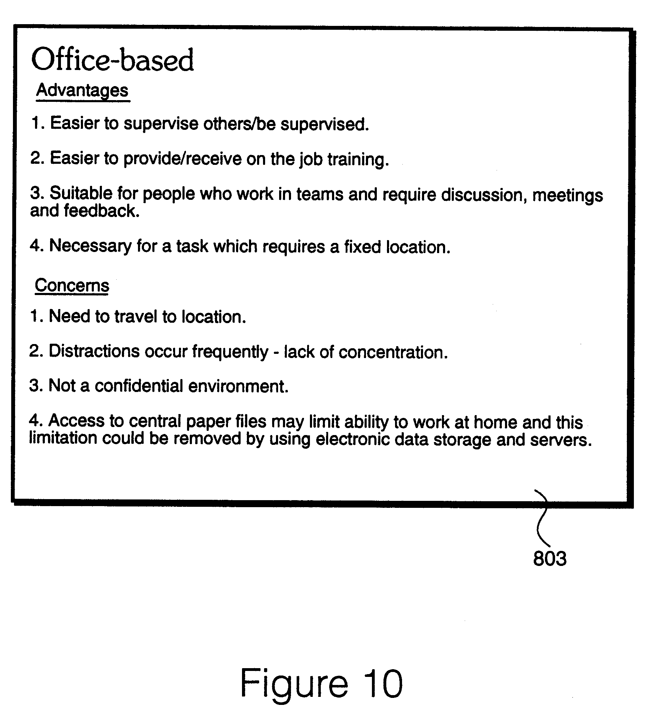

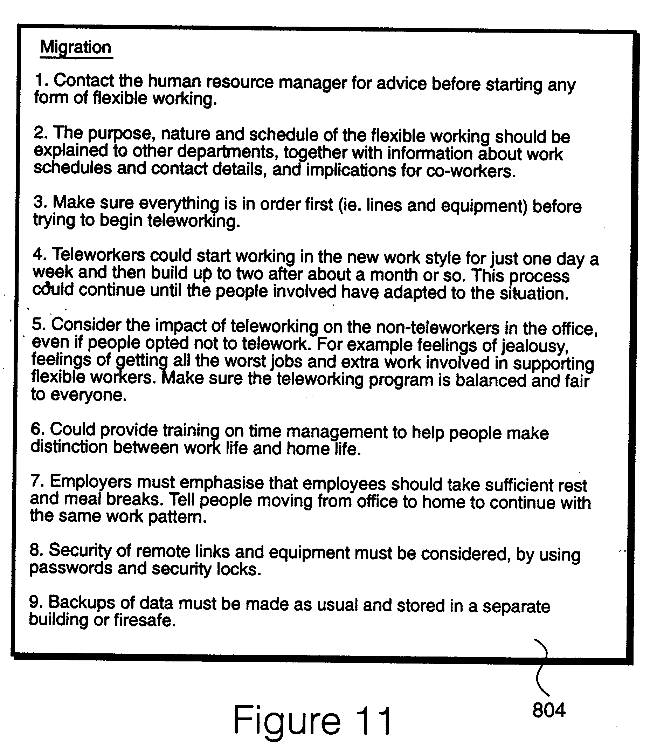

The narratives table 702 may include a plurality of tables as illustrated in Figures 8, 9, 10 and 11. Table 801 contains a list of indexed narratives consisting of advantages and concerns relating to multi-centred working. Similarly, indexed lists of advantages and concerns are provided in table 802 for home-based working and a similar table for office-based working is provided in table 803, again including advantages and concerns. A further table 804 includes indexed narratives for migration, that is to say, narratives to be included in consultation reports relating to the changeover from present conditions of working to the recommended flexible mode of working.

The narratives included in tables 801, 802, 803 and 804 are relatively self explanatory and includes such entries as "may save office space through hotdesking etc" as an advantage with similar concerns such as "may spend a lot of time away from home/social circle". Each of these narratives are indexed by a unique index or key, such that they may be identified by pointers present within the final report table 705.

After data has been collected, as illustrated in Figure 2, the data stored in responses table 703 is processed, as identified at step 204.

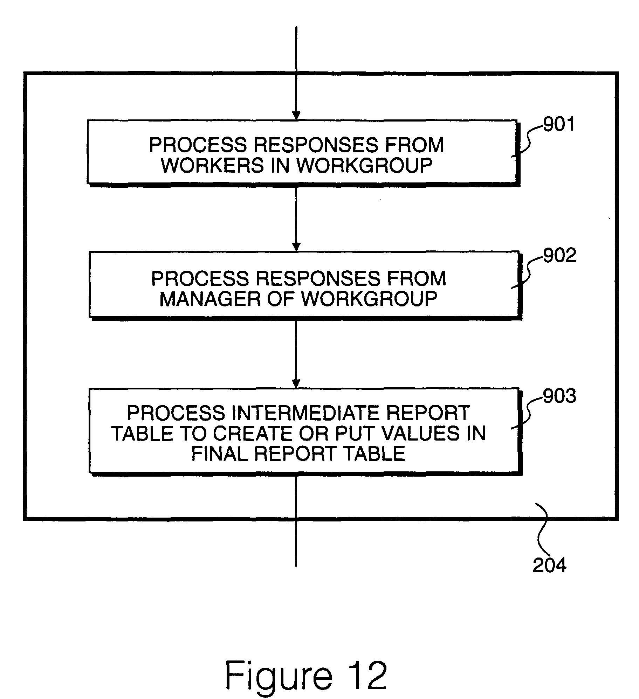

Step 204 is detailed in Figure 12 and consists of a step of processing responses from workers in a work group type defined at step 202. This results in information being written to the intermediate report table 704. Thereafter, at step 902 responses from the manager of the work group or process, representing information which relates to the functionality of the group as a whole, again results in intermediate data being written to the intermediate report table 704.

Thereafter, at step 903, the data written to the intermediate report table 704 is processed, resulting in final report data being written to the final report table 705. Thus, it is important to note that the final output report will rely upon processing, effectively in combination, data received from individual members of the group and data relating to the group as a whole.

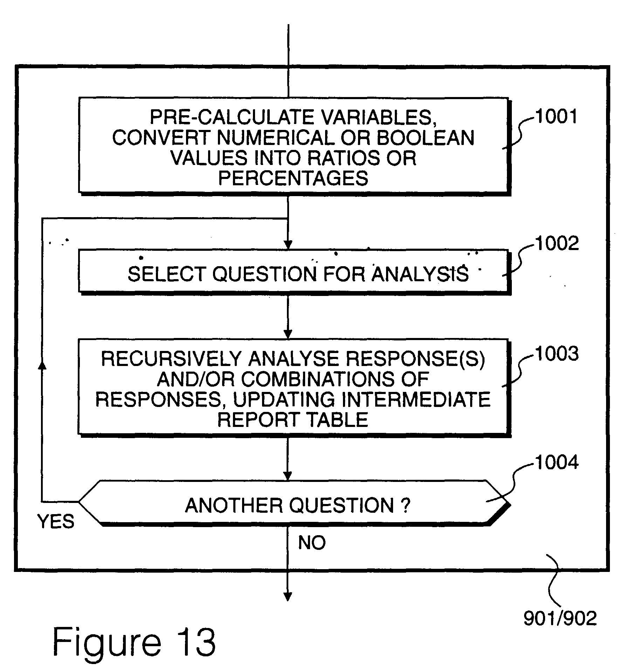

The procedures performed at step 901 and the procedures performed at step 902 are substantially similar and are detailed in Figure 13. At step 1001 certain variables are pre-calculated, essentially converting numerical or boolean values into ratios or percentages etc so as to normalise them to enable comparisons to be made.

At step 1002 a question is selected for analysis and at step 1003 responses to the question selected at step 1002 are recursively analysed. The recursive analysis involves, while processing a first response, taking account of other responses which will then influence the processing of the first response. Processing in this way is sometimes referred to as multi-dimensional given that the outcome is not purely dictated by a single dimension of a particular response. Thereafter, at step 1004 a question is asked as to whether there is another question to be analysed and when answered in the affirmative control is returned to step 1002. Eventually, all of the questions will have been analysed resulting in a question asked at step 1004 being answered in the negative.

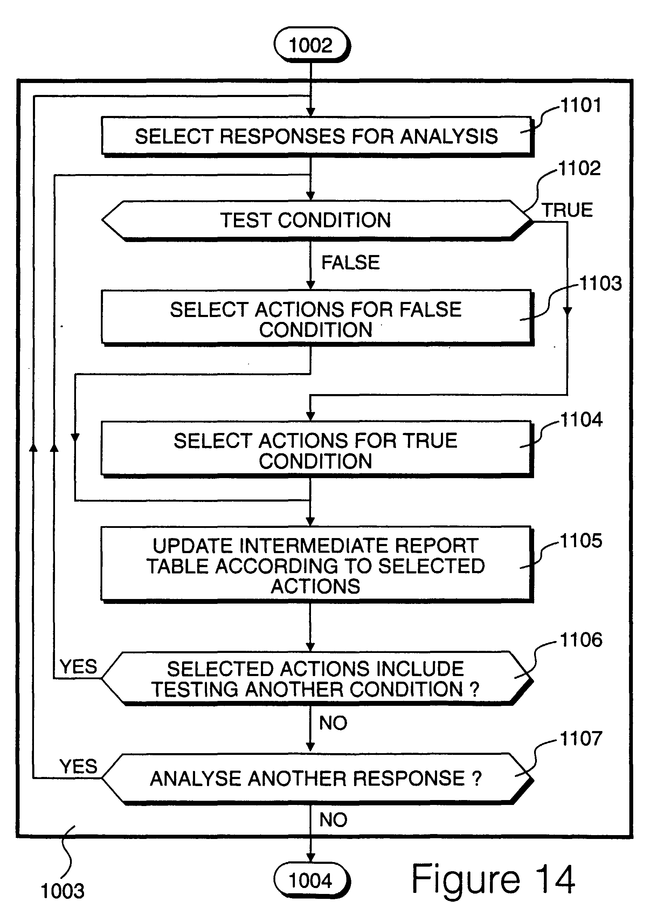

The recursive analysis process identified at step 1003 is detailed in Figure 14. At step 1101 a response selected for analysis is supplied to step 1102 which performs a test. The nature of the test will depend upon the particular response selected and its importance within the overall schemer will vary, given that some questions may be included purely as a pre-cursor to answering a subsequent question.

The nature of the test performed at step 1102 will result in a true or false outcome and when a false outcome is produced control is directed to step 1103.

At step 1103 actions are selected in response to the false output produced at step 1102. These actions include the tagging of appropriate narratives, incrementing scores, where a score is provided for each of the three possible alternatives, in this example, consisting of office-based, home-based or multi-centre based working. Furthermore, the action performed at step 1103 may also include the possibility of selecting a further test, of the type performed at step 1102.

If the outcome from the test performed at step 1102 results in a true condition, control is directed to step 1104 where, actions similar to those selected at step 1103, are selected as being appropriate for the true condition. However, it should be noted, that steps 1103 and 1104 only perform action selection and do not, at this stage, actually perform the action so selected.

The actions selected at step 1103 or at step 1104 are effected at step 1105, which results in an updating of the intermediate report table 704. Thereafter, at step 1106 a question is asked as to whether any of the selected actions include testing another condition and when answered in the affirmative, in a recursive manner, control is returned to step 1102, thereby allowing the test conditions to be effected as previously described. Thus, this may result in further updating of the intermediate report table at step 1105 with control then being directed to step 1106. Again, one of the selection actions may include a requirement for further testing which would again result in a further recursion around the loop and so on until all necessary tests have been performed. Eventually, all of the tests will have been performed resulting in the question asked at step 1106 being answered in the negative.

Thereafter, a question is asked at step 1107 as to whether another response is to be analysed and when answered in the affirmative control is returned to step 1101. Eventually, all of the responses will have been analysed resulting in the question asked at step 1107 being answered in the negative. This results in control being directed to step 1004 of Figure 13 where a question is asked as to whether another question is to be considered. Thus, it should be appreciated that, given the inclusion of step 1107 where a question is asked as to whether another response is to be considered, the structure of the procedure allows each question to include a plurality of responses, as arises when check boxes are included to provide a number of possible valid answers to a particular question, which are not mutually exclusive.

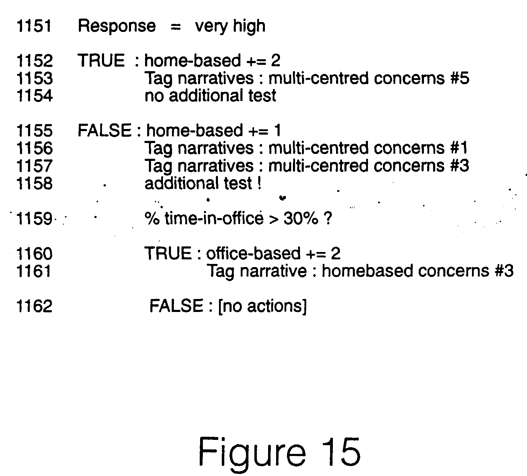

An example of response data processed by the procedure illustrated in Figure 14 is shown in Figure 15. The particular response data shown in Figure 15 is derived as response data to question five of the form shown in Figure 5 which states, "If you were to fix a date to work at home what is the probability of keeping to that plan due to unforeseen last minute changes to your diary?". The possible responses, of which there are four, include very high, moderately high, moderately low, very low. Thus, it is only possible to make one response to this particular question therefore, when considering this question, the question asked at step 1107 will be answered in the negative on the first iteration.

After selecting the response data at step 1101 the test condition will be effected at step 1102, as illustrated in Figure 15. This consists, as shown at line 1151, of asking the question as to whether the response was "very high". As shown at line 1152, if this is answered as true, to the effect that the answer was "very high", as with the present case, particular actions are selected at step 1103 as specified at lines 1152, 1153 and 1154. Similarly, if the test condition is answered as false, to the effect that the response is not very high, false conditions are selected, as shown at lines 1155, 1156, 1157 and 1158.

After selections have been made, either at step 1103 or at step 1104, the updating of the intermediate report table, by effecting the actions selected, is performed at step 1105. Thus, if the test condition posed at step 1102 is answered as true, the home-based score is incremented by +2. Thereafter at line 1153 multi-centred concern number 5 is tagged and at line 1154 confirmation is defined to the effect that no additional tests are required thus the question asked at step 1106 will be answered in the negative.

If the test condition is answered as false, to the effect that the response was not "very high", actions 1155 to 1158 are selected at step 1104. These actions are then performed at step 1105, resulting in the home-base score being incremented by the allocated waiting for the question at line 1155, in this case +1. Thereafter, at line 1156 multi-centred concern narrative number 1 is tagged and at line 1157 similar concern number 3 is tagged. Thereafter, at line 1158, an indication is made to the effect that an additional test is required.

This further test, again performed at step 1102, is specified at line 1159 and consists of asking as to whether the percentage time in the office is greater than 30%. Again, this question is answered as true or false, resulting in appropriate actions being selected at step 1103 or at step 1104, for implementation of step 1105. Thus, if the test is answered as true, the office-based score is incremented by a waiting of +2 and home-based concern narrative number 3 is tagged. If the test condition has been answered as false, no further actions are implemented.

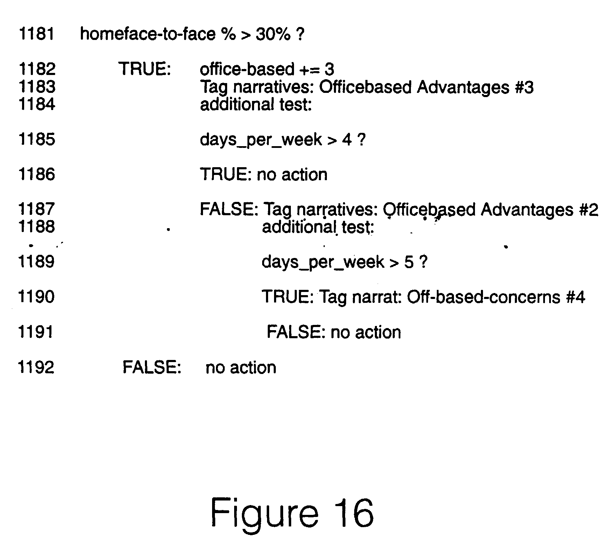

The operation of the procedure shown in Figure 14 with respect to question 4 of the form shown in Figure 5 is illustrated in Figure 16. A response will have been made in terms of the number of hours of face-to-face communication and this will have been converted into a percentage at step 902 of Figure 12.

The test condition applied at step 1102 consists of asking as to whether the percentage time is greater than 30%. If answered as true, the office-based score is incremented by a waiting of +3 at 1182, office-based advantages narrative number 3 is tagged at 1183 and the presence of an additional test is identified at 1184. This results in the question asked at step 1106 being answered in the affirmative, such that a further test condition may be considered as to whether the days per week worked is greater than four. If this question is answered as true, no further action is taken. However, if this subsidiary question is answered as false, office-based advantages narrative number 2 is tagged at step 1187 and an additional test is identified at 1188. This additional test, defined at 1189, consists of asking as to whether the days per week worked is greater than five and if answered as true, office-based concern number 4 is tagged at 1190 and if answered as false no further action is taken, as indicated at 1191.

As an alternative, if the original question defined at 1181 is answered as false, no further action is taken as shown at 1192.

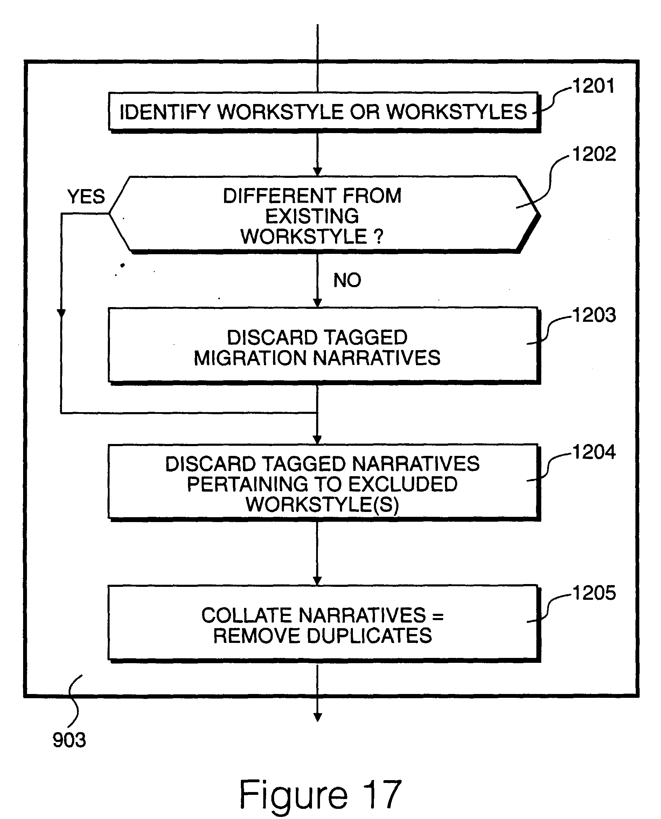

Step 903 of Figure 12, consisting of the processing of the intermediate report table to update the final report table is detailed in Figure 17.

The system is configured to consider particular types of working, which, in the example, consists of office-based, home-based or multi-centred working which may be identified as particular work styles. At step 1201 a particular work style or work styles are identified as being appropriate for the work group under consideration.

At step 1202 a question is asked as to whether the work style currently undertaken differs to that determined by the process. If the work styles are not different, it may be assumed that no major change will occur and consequently tagged migration narratives are discarded at step 1203. Alternatively, if the question asked at step 1202 is answered in the affirmative, step 203 is bypassed and control is directed to step 1204.

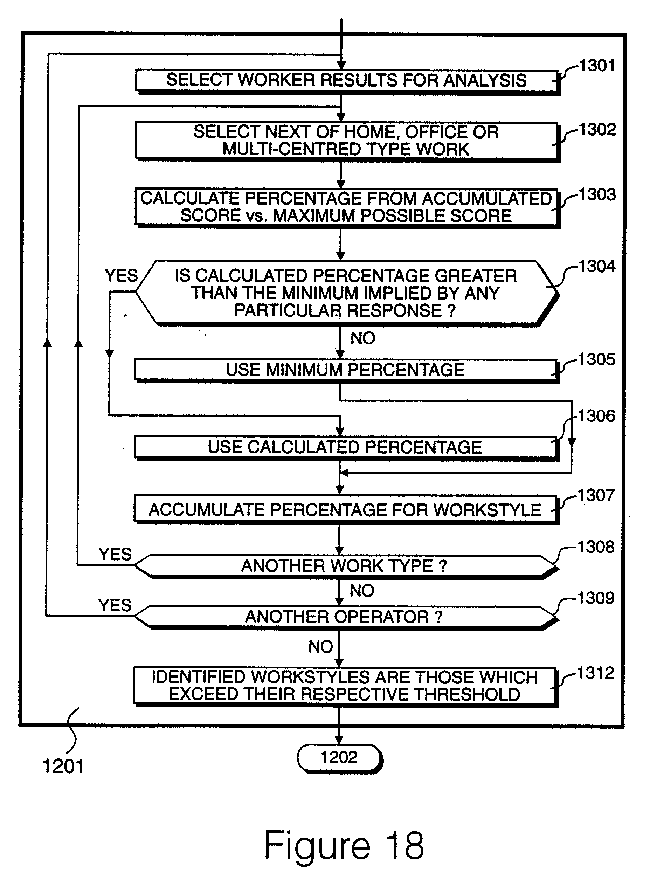

At step 1204 tagged narratives pertaining to excluded work styles are discarded whereafter at step 1205 tagged narratives are collated and duplicates are removed. Process 1201, for identifying preferred work style, is detailed in Figures 18. The process illustrated in Figure 18 is performed for each worker within the group therefore at step 1301 a first worker results are selected for analysis.

At step 1302 one of the work styles is selected and at step 1303 a weighting percentage is derived by comparing accumulated scores against the maximum possible score.

At step 1304 a question is asked as to whether the percentage calculated at step 1303 is greater than the minimum implied by any particular response and if this question is answered in the negative, the implied minimum percentage is adopted at step 1305. Alternatively, if the question asked at step 1304 is answered in the affirmative, to the effect that the calculated percentage is greater than the minimum implied, control is directed to step 1306 and the actual calculated percentage is adopted.

At step 1307 an accumulation is retained for all of the operators and the particular percentage determined for the operator under consideration is added to this accumulated value, for the particular work type being processed.

A final work style calculation is performed and a report is produced before another work type is considered. Thereafter, a question is asked at step 1308 as to whether another work type is to be processed which, when answered in the affirmative, returns control to step 1302. Thus, each of the work types will be considered resulting in values being added to each of the accumulated percentages, one for each work type.

Eventually, all of the work types will have been considered resulting in the question asked at step 1308 being answered in the negative and a question being asked at step 1309 as to whether another operator is to be considered.

When the question asked at step 1309 is answered in the affirmative, control is returned to step 1301, resulting in the next worker being selected and again percentage values for each of the three work styles being added to the accumulation total at step 1307.

Eventually, all of the operators will have been considered resulting in the question asked at step 1309 being answered in the negative and control being directed to step 1301.

At step 1310 a question is asked as to whether at least one of the work style accumulated scores is greater than its respective threshold. If all work style percentages are below the threshold, the recommended work style is a combination of home, office and multi since there is no biased towards one particular work style. Similarly, if all work style percentages are above the threshold, the preferred work style will be a combination. At step 1312 work styles are identified which exceed their respective thresholds, allowing consultation reports and a selection of appropriate narratives to be made in response to the work style identified as being appropriate for the group under consideration.

## Claims

1. A method of generating consultation data by selecting pre-stored narratives, comprising steps of
establishing a communication channel between a consultation station and a processing station;
supplying response data to said processing station; and
analysing said response data at said processing station, wherein a first response is analysed to select a narrative and
while processing said first response, a second response is recursively processed so as to modify the processing of said first response.

2. A method according to claim 1, wherein said narratives are stored against indexes in a relational database table.

3. A method according to claim 2, wherein a final report table points to said indexes in said narratives table.

4. A method according to any of claims 1 to 3, wherein said processing station supplies a pro-forma to a consultation station and said response data is returned to said processing station after entries have been made within said pro-forma.

5. A method according to any of claims 1 to 4, wherein said response data is stored in a responses table of a relational database.

6. A method according to claims 1 to 5, wherein responses are stored for individual members of a consultation group.

7. A method according to claim 6, wherein responses are stored for said group as a whole

8. A method according to any of claims 1 to 7, wherein a response is selected for analysis, a test condition is applied upon said response to produce either a true outcome or a false outcome and respective actions are performed in response to said outcome.

9. A method according to claim 8, wherein said action involves supplying a second test condition wherein said second condition is unrelated to the question posed for said first test condition but which may modify the processing of said first response.

10. Apparatus for generating output signals representing consultation data, comprising a processing station and at least one consultation station;
means for communicating between said stations using hypertext mark-up language;
means at said consultation stations for supplying response data to said processing station; and
means at said processing station for analysing a first response to select an output narrative and for recursively processing a second response so as to modify the processing of said first response.
